# EUROPEAN PATENT APPLICATION

(11) **EP 2 056 602 A1**
(43) Date of publication of application: **06.05.2009**
(21) Application number: 08153684.9
(22) Date of filing: 29.03.2008
(51) Int. Cl.: H04N 7/16

(54) **Method for providing communication using electronic program guide (EPG) and image apparatus using the same**

(30) Priority: 05.11.2007 KR 20070112140
(71) Applicant: Samsung Electronics Co., Ltd., Suwon-si, Gyeonggi-do 442-742 (KR)
(72) Inventor: Kim, Ji-eun, Yongin-si, Gyeonggi-do (KR); Jo, Sung-baik, Suwon-si, Gyeonggi-do (KR); Park, Ji-hyun, Seoul (KR); Kim, Il-kwon, Suwon-si, Gyeonggi-do (KR)
(74) Representative: Robinson, Ian Michael

(57) **Abstract**

A method for providing communication of an image apparatus (200), and an image apparatus (200) applying the same are provided. The method includes selecting, using an input device (280), a program on an Electronic Program Guide (EPG); and inputting, using the input device (280), a communication request regarding the selected program to an external image apparatus (100) connected via a communication network (150).

## Description

### BACKGROUND OF THE INVENTION

### 1. Field of the Invention

Methods and apparatuses consistent with the present invention relate to communication, and more particularly, to a method for providing communication among a plurality of viewers of image apparatuses to view the same program concurrently, and an image apparatus which applies the method.

### 2. Description of the Related Art

Televisions (TV) have continuously been developed and now provide a variety of additional functions besides displaying programming. TVs now provide additional functions such as audio communication or text chats via communication networks. TVs also provide video telephone functions.

As TVs are enabled to access the Internet, an increasing number of users use TVs to receive various services via the Internet. Internet TVs are an example.

Since the Internet allows users to exchange a variety of data, services such as audio communication or video telephone services are available using a TV. Users can also chat with each other via the Internet, while watching the same TV program.

However, it is inconvenient for users to request communication every time they start viewing a TV program. Therefore, a method for providing communication among a plurality of TV users systematically and conveniently, is necessary.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

The present invention provides a method providing communication among a plurality of television (TV) users systematically and conveniently, according to which communication with external image apparatuses connected via a communication network is requested through an Electronic Program Guide (EPG) regarding a program selected by a user, and an image apparatus which applies the same.

The present invention also provides receiving a communication request information from an external image apparatus and sending back determination information, including information regarding whether the communication request is accepted or rejected.

According to an aspect of the present invention, there is provided a method of providing communication of an image apparatus, comprising selecting, by an input device, a program on an Electronic Program Guide (EPG), and inputting, by the input device, a communication request through an external image apparatus connected via a communication network, regarding the selected program.

According to another aspect of the present invention, the method may further comprise sending information about the communication request to the external image apparatus, receiving a result from the external image apparatus in response to the communication request, and displaying result information on the EPG, regarding the result in response to the communication request.

According to another aspect of the present invention, the displaying may comprise displaying an icon to represent the result information at a region of the EPG that displays the selected program.

According to another aspect of the present invention, the result information may comprise one of a communication-requesting state, a communication-accepted state, a communication-rejected state, and a communication-in-process state.

According to another aspect of the present invention, the method may further comprise starting communication with the external image apparatus at a time when a first program starts, the first program having the communication-accepted state as the result information, and changing the result information of the first program to the communication-in-process state.

According to another aspect of the present invention, the method may further include changing the channel of the external image apparatus to a channel which broadcasts the first program, at a time when the first program starts.

According to another aspect of the present invention, the method may further comprise controlling the image apparatus and the external image apparatus to enter a power-on state at the time when the first program starts, if at least one of the image apparatus and the external image apparatus is in a power-off state.

According to another aspect of the present invention, the method may further comprise recording a second program along with content of the communication, the second program having the communication-in-process state as the result information.

According to another aspect of the present invention, the information about the communication request may comprise at least one of information about whether the communication is requested or not, user information, and program information.

According to another aspect of the present invention, the inputting may comprise inputting the communication request regarding a portion or an entire duration of broadcast time of the selected program.

According to another aspect of the present invention, the communication may comprise audio communication, or video telephone services.

According to another aspect of the present invention, the image apparatus and the external image apparatus may comprise a broadcast receiving device to receive a broadcast signal and display the received broadcast signal.

According to another aspect of the present invention, an image apparatus is provided, comprising an interface connected to an external image apparatus via a communication network, and a control unit which controls a communication request, with the external image apparatus, input by a user, regarding a program selected by the user, on an Electronic Program Guide (EPG).

According to another aspect of the present invention, the interface sends information about the communication request to the external image apparatus, and receives from the external image apparatus a result determined in response to the communication request, and the control unit controls displaying result information on the EPG to provide information about the result determined in response to the communication request.

According to another aspect of the present invention, the control unit controls displaying the result information along with an icon at a region of the EPG that shows the selected program.

According to another aspect of the present invention, the result information may comprise one of a communication-requesting state, a communication-accepted state, a communication-rejected state, and a communication-in-process state.

According to another aspect of the present invention, the control unit starts communication with the external image apparatus at a time when a first program starts, the first program comprising the communication-accepted state as the result information, and changing the result information of the first program to the communication-in-process state.

According to another aspect of the present invention, the control unit records a second program along with content of the communication, the second program including the communication-in-process state as the result information.

According to another aspect of the present invention, the control unit receives a communication request for a portion or an entire duration of broadcast time of the selected program.

According to another aspect of the present invention, the communication may include audio communication, or video telephone services.

According to another aspect of the present invention, the image apparatus and the external image apparatus comprise a broadcast receiving device to receive a broadcast signal and display the received broadcast signal.

According to another aspect of the present invention, a method of providing communication of an image apparatus is provided, the method comprising receiving information about a communication request from an external image apparatus connected via a communication network, inputting, using an input device, determination information comprising information about whether the user accepts or rejects the received communication request, sending the determination information to the external image apparatus, and displaying the determination information on an Electronic Program Guide (EPG).

According to another aspect of the present invention, the displaying may comprise displaying an icon to represent the result information on a region of the EPG that shows a program related to the communication request.

According to another aspect of the present invention, an image apparatus is provided, comprising an interface which is connected to an external image apparatus via a communication network, receives information about a communication request from the external image apparatus, and sends determination information to the external image apparatus including information about whether the received communication request is accepted or rejected, and a control unit which receives the determination information from a user, and displays the determination information on an Electronic Program Guide (EPG).

According to another aspect of the present invention, the control unit controls displaying an icon to represent the result information at a region of the EPG that shows a program related to the communication request.

### BRIEF DESCRIPTION OF THE DRAWINGS

The above and other aspects of the present invention will be more apparent from the following detailed description of exemplary embodiments with reference to the accompanying drawings, in which:
FIG. 1 illustrates a television (TV) communication system according to an exemplary embodiment of the present invention;
FIG. 2 is a block diagram of a TV according to an exemplary embodiment of the present invention;
FIG. 3 is a flowchart illustrating the process of displaying an Electronic Program Guide (EPG) including information about a communication request made between a communication requesting side and a communication receiving side, according to an exemplary embodiment of the present invention;
FIG. 4 illustrates an EPG screen displayed on a communication requesting side according to an exemplary embodiment of the present invention;
FIG. 5 illustrates an EPG screen displayed on a communication receiving side according to an exemplary embodiment of the present invention; and
FIG. 6 illustrates a screen to select a counterpart of video telephone services according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

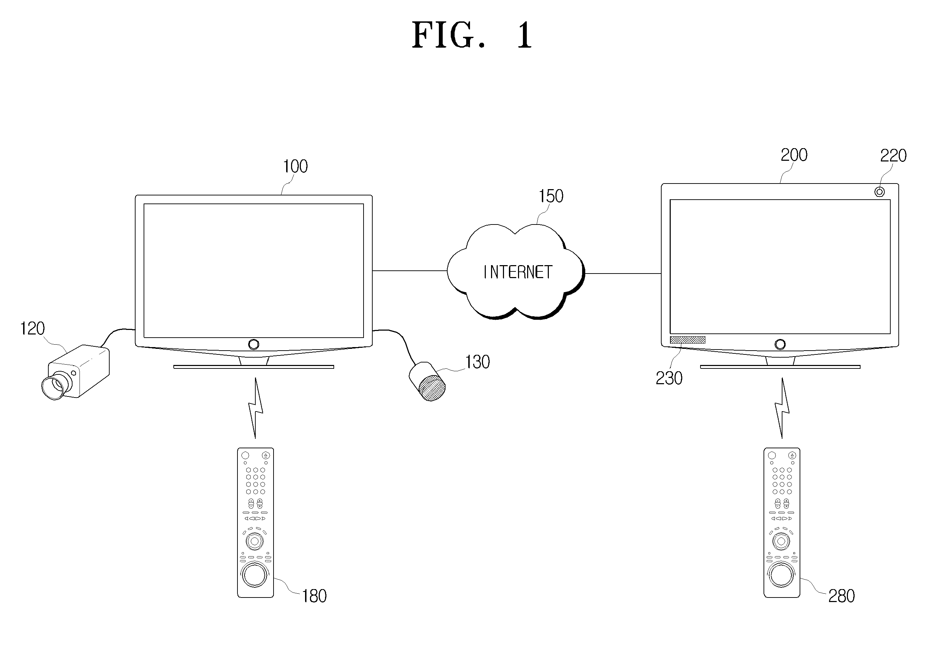

FIG. 1 illustrates a television (TV) communication system according to an exemplary embodiment of the present invention. Referring to FIG. 1, the TV communication system includes a receiver TV 100 and a TV 200 connected to the receiver TV 100 via the Internet 150.

An external photographing unit 120 and an external microphone 130 are connected to the receiver TV 100. The receiver TV 100 is controlled by a user through a receiver remote controller 180.

The TV 200, as a sending side, includes an internal photographing unit 220 and microphone 230. The TV 200 is controlled by a user through a remote controller 280.

The TVs 100 and 200 may have external or internal photographing unit 220 and microphone 230.

Since the TV 200 and the receiver TV 100 are connected to each other via the Internet 150, the TVs 100 and 200 are capable of communication with each other. The term 'communication' herein refers to the process in which a user of the TV 200 exchanges communication with a user of the receiver TV 100 through their TVs. The communication thus includes audio communication, video telephone services, or chats.

In the process of audio communication, the users of the TVs 100 and 200 may use the microphones 130 and 230. In the process of video telephone services, the users of the TVs 100 and 200 may use the photographing units 120 and 220 and the microphones 130 and 230. In the process of chatting, the users of the TVs 100 and 200 may use the remote controllers 180 and 280, or keyboards (not illustrated).

The TV 200 requests the receiver TV 100 communication. If the receiver TV 100 accepts the request for communication, the TVs 100 and 200 start communication.

The TVs 100 and 200 communicate with each other via the Internet 150. The Internet 150 thus includes a communication server of a company or organization that provides communication. For example, for audio communication through Internet telephone calling or for video telephone services between the TVs 100 and 200, the Internet 150 may include a server of a company or organization that provides the Internet call service using a Voice over Internet Protocol (VoIP) or Multimedia over Internet Protocol (MoIP).

The TVs 100 and 200 are thus able to start communication with each other using the server of the Internet call service provider.

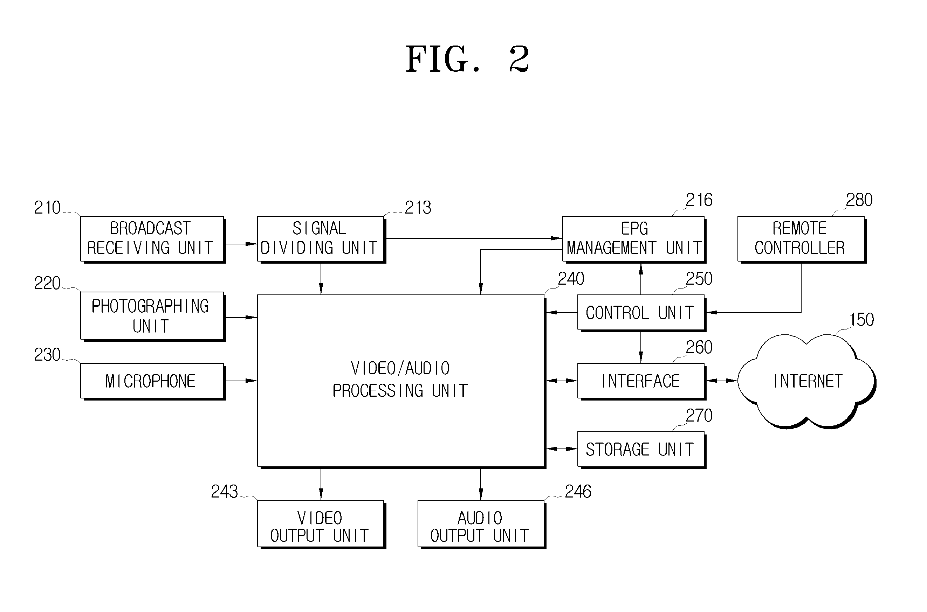

The structure of the TV 200 will be explained in detail below with reference to FIG. 2, a block diagram of the TV 200 according to an exemplary embodiment of the present invention.

The TV 200 may include a broadcast receiving unit 210, a signal dividing unit 213, an Electronic Program Guide (EPG) management unit 216, a photographing unit 220, a microphone 230, a video/audio processing unit 240, a video output unit 243, an audio output unit 246, a control unit 250, an interface 260, a storage unit 270, and a remote controller 280.

The broadcast receiving unit 210 receives a broadcast by wire or wirelessly from a broadcast station or satellite, and decodes the received broadcast.

The signal dividing unit 213 divides a broadcast signal into a video signal, audio signal, and EPG signal. The signal divider 213 sends the video and audio signal to the video/audio processing unit 240, and sends the EPG signal to the EPG management unit 216.

The EPG management unit 216 receives an EPG signal, generates a video signal to construct an EPG screen, and sends the EPG screen to the video/audio processing unit 240.

The EPG management unit 216 also adds result information to the EPG information, regarding the details of communication request, and whether the request is accepted or rejected. The result information may include one of the state in which the communication is requested, accepted, rejected, or in process.

The photographing unit 220 photographs a user, and sends the captured image to the video/audio processing unit 240. The captured image is sent to the video output unit 243 to be displayed, or stored in the storage unit 270. For a video telephone services, the captured image may be sent to an external TV via the interface 260.

The microphone 230 receives a user's voice and sends the input sound to the video/audio processing unit 240. The input sound may be output through the audio output unit 246 to the speaker (not shown), or stored in the storage unit 270. For audio or video telephone services, the input sound may be sent to an external TV via the interface 260.

The video/audio processing unit 240 conducts signal processing such as video decoding, video scaling, or audio decoding with the video and audio signals received through the signal dividing unit 213, the EPG management unit 216, the photographing unit 220 and the microphone 230. The video/audio processing unit 240 may output the video signal through the video output unit 243, and output the audio signal through the audio output unit 246.

In order to store the video and audio signals to the storage unit 270 or to send out to the external TV through the interface 260, the video/audio processing unit 240 outputs the video and audio signals to the storage unit 270 or the interface 260 in a compressed format.

The video output unit 243 may display the video output from the video/audio processing unit 240, or output to an external device such as an external display which is connected through an external output terminal.

The audio output unit 246 may output the audio output from the video/audio processing unit 240 through the speaker, or output to an external device such as an external speaker connected through an external output terminal.

The interface 260 connects the TV 200 to the Internet 150. The interface 260 also sends communication request information to the receiver TV 100. Additionally, the interface 260 receives the result of communication request from the receiver TV 100.

The communication request information is required to request the receiver TV 100 for communication. The communication request information includes information about whether or not the communication is requested, user information of the transmitter TV 200, and program information related to the communication. The user information includes user ID, telephone number or address. The program information may include broadcasting channel, program title, broadcast starting time, broadcast ending time, and duration of the broadcast.

An interface (not illustrated) of the receiver TV 100 receives the communication request information from the TV 200, and sends determination information to the TV 200, regarding whether the received communication request is accepted or rejected.

The storage unit 270 stores therein broadcast data received from the broadcast receiving unit 210, video data captured through the photographing unit 220, and audio data acquired through the microphone 230. The storage unit 270 may also output the stored video and audio to the video/audio processing unit 240. The storage unit 270 may be implemented as a hard disk, or non-volatile memory.

The remote controller 280 receives a user's manipulation and sends it to the TV 200. The user may select a program and an intended counterpart for communication using the remote controller 280. The remote controller 280 may be used as a tool to input text messages during chatting.

The control unit 250 analyzes a user command based on the user's manipulation received from the remote controller 280, and controls the overall operation of the TV 200 according to the user command.

Specifically, the control unit 250 receives from a user a request for communication with an external device, relating to a program user selects on the EPG, and controls displaying the result information, indicating the result of the communication request, on the EPG.

The control unit 250 also controls so that the result information is displayed with icons at the region of the EPG that shows the selected program. The result information includes one of the states of communication: requesting, accepted, rejected, and in process.

The control unit 250 starts communication with the receiver TV 100 upon starting of the program having the result information indicating the state of communication-accepted. The control unit 250 changes the result information of the program into the state of communication-in-process.

The control unit 250 may record a program having the state of communication-in-process as the result information, along with the content of the communication according to a user input.

Meanwhile, if the control unit (not illustrated) of the receiver TV 100 receives the communication request information from the TV 200, the control unit (not illustrated) receives determination information from the user, including information indicating whether the communication request is accepted or rejected, and causes the determination information to be displayed on the EPG.

The process of performing communication using the EPG will be explained below, and the operations of the TV 200 and the receiver TV 100 in light of this process will also be explained in detail.

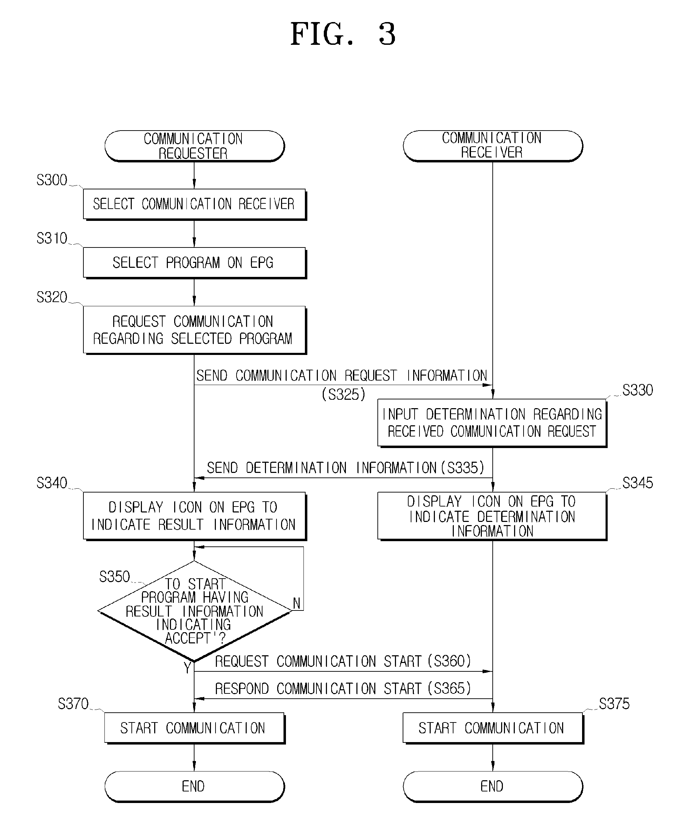

FIG. 3 is a flowchart illustrating the process of displaying an Electronic Program Guide (EPG) including information about a communication request made between a communication requesting side and a communication receiving side, according to an exemplary embodiment of the present invention.

Referring to FIG. 3, the term 'communication requester' refers to a user of the TV 200, and the term 'communication receiver' refers to a user of the receiver TV 200.

In operation S300, the communication requester selects a communication receiver using the remote controller 280. In this process, the communication requester may select the communication receiver by directly inputting a corresponding telephone number. Alternatively, the communication requester may select the communication receiver from a pre-stored address book.

Accordingly, the control unit 250 controls so that an input window to input a telephone number, or the pre-stored address book of the storage unit 270, is displayed.

In operation S310, the communication requester selects a program on the EPG. In operation S320, the communication requester requests a communication receiver for communication, regarding the selected program.

In operation S325, if the user requests communication regarding the selected program, the control unit 200 controls the interface 260 to send the communication request information to the receiver TV 100.

The control unit of the receiver TV 100 notifies the communication receiver that the communication request information is received. Therefore, the control unit of the receiver TV 100 may display a message or an icon on the screen and inform the reception of the communication request information. The control unit of the receiver TV 100 may also cause an alarm to be generated to notify that the communication request information is received.

In operation S330, the communication receiver inputs determination information in response to the received communication request. The determination information includes whether the communication receiver accepts or rejects the request. For example, the determination information may include one of the states of communication-undecided, in process, accepted, and rejected.

In operation S335, the receiver TV 100 sends the determination information to the requesting TV 200.

In operation S340, the requesting TV 200 displays an icon representing the result information on the EPG. The result information indicates the result made in response to the communication request. For example, the result information may include one of the states of communication-requesting, accepted, rejected, or in process. The result information may be added to the EPG of the selected program.

Specifically, the control unit 250 of the TV 200 adds the result information to the program information of each of the programs displayed on the received EPG. The control unit 250 then controls the EPG management 126 and the video/audio processing unit 240 to display the EPG added with the result information.

The control unit 250 may also control displaying an icon representing the result information on the EPG region. Since the result information is indicated in an icon configuration in response to the communication request, the communication requester can easily notice the result of his request.

In operation S345, the receiver TV 100 displays an icon representing the determination information on the EPG. Specifically, the determination information is added to the EPG of the selected program and displayed.

The result information on the side of the communication requester and the determination information on the side of the communication receiver will be explained below.

If the communication receiver does not decided on the communication request, the selected program on the side of the requesting TV 200 shows the result information as 'communication-requesting,' and the corresponding program on the side of the receiver TV 100 shows the determination information as 'communication-undecided.'

If the communication receiver decides to accept the request, the selected program on the side of the requesting TV 200 shows the result information as 'communication-accepted,' while the corresponding program on the side of the receiver TV 100 shows the result information as 'communication-accepted.'

If the communication receiver rejects the communication request, the selected program on the side of the requesting TV 200 shows the result information as 'communication-rejected,' while the corresponding program on the side of the receiver TV 100 shows the determination information as 'communication-rejected.'

If the communication receiver is in the process of communication with the communication requester, the selected program on the requesting TV 200 shows the result information as 'communication-in-process,' and the corresponding program on the side of the receiver TV 100 also shows the determination information as 'communication-in-process.'

In operation S350, the control unit 250 of the requesting TV 200 determines whether the program having the result information as 'communication-accepted' is started.

In operation S350-Y, if the program having 'communication-accepted' is started, in operation S360, the control unit 250 requests the receiver TV 100 to start the communication. In operation S365, the receiver TV 100 sends a response to the communication start request to the requesting TV 200.

In operations S370 and S375, the receiver TV 100 and the requesting TV 200 start communication.

In operation S350-Y, if the program having 'communication-accepted' is started, the two TVs 100 and 200 may be automatically connected to each other and start communication, omitting the start requesting process.

The receiver TV 100 and the requesting TV 200 change the result information and the determination information of the currently started program into 'communication-in-process.'

Accordingly, the receiver TV 100 and the requesting TV 200 request communication using the EPG and automatically start the communication.

If the communication requester inputs a recording command through the remote controller 280 during communication, the content of the communication between the requester and the receiver may be recorded along with the program. Specifically, the requester and the receiver in video telephone services or audio communication, may record the video or audio content of the communication. If the requester and the receiver are chatting, the content of the chatting may also be recorded along with the program.

The control unit 250 may control so that the size of a communication window may be adjusted, the position of the window may be changed, or the window may be hidden.

Upon starting communication, if the receiver TV 100 and the requesting TV 200 are reproducing signals from different channels, the control units of the receiver TV 100 and the requesting TV 200 may control so that the channels can change to a channel related to the communication request, automatically or according to a user's selection.

For example, it is assumed that the communication requester requests communication regarding program A of channel 1, and the communication receiver accepts the request. If the communication requester is viewing channel 2 and the communication receiver is viewing channel 3 when it is time to start program A, the TVs of both the communication requester and receiver change channels to channel 1 automatically, and the communication is started.

If at least one of the receiver TV 100 and the transmitter TV 200 is in power-off state, the control unit 250 may control that the TVs 100 and 200 can turn to power-on states. If the transmitter TV 200 is in power-off state, the control unit 250 may control the transmitter TV 200 to turn to the power-on state at a time when program A starts. If the receiver TV 100 is in power-off state, the control unit 250 may send out a control signal to the receiver TV 100 at the time when program A starts, directing the receiver TV 100 to turn to power-on state.

As explained above, the communication requester and the receiver can communicate with each other, while viewing the same channel, using the EPG.

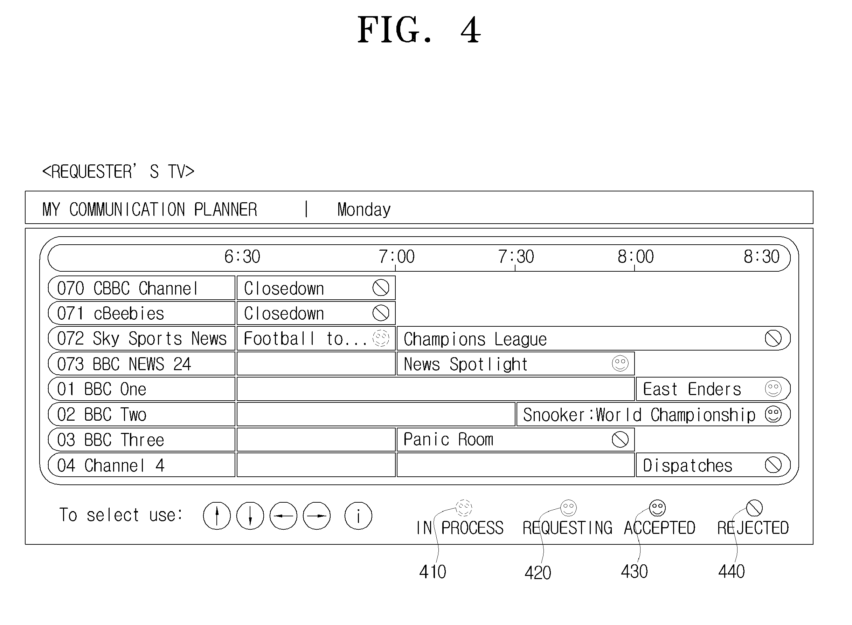

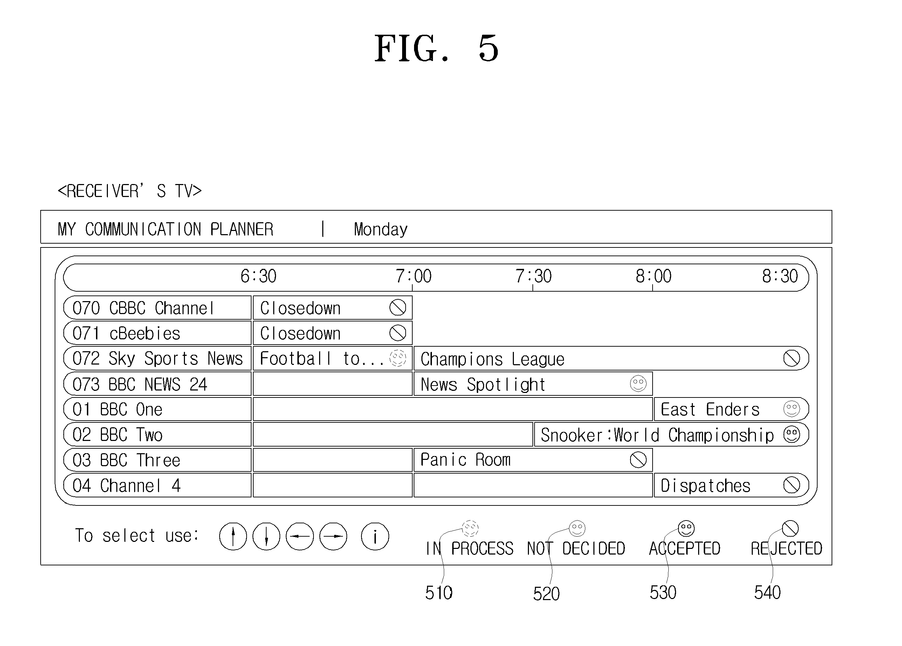

The EPG screen showing the result information and the determination information in response to the communication request will now be explained below with reference to FIGS. 4 and 5.

FIG. 4 illustrates an EPG screen displayed on a communication requesting side according to an exemplary embodiment of the present invention, and FIG. 5 illustrates an EPG screen displayed on a communication receiving side according to an exemplary embodiment of the present invention.

The EPG illustrated in FIGS. 4 and 5 have the same structure, as this is received from the broadcast station. Since the result information and the determination information in response to the communication request have to match, the icons are also provided in corresponding arrangements. The EPG illustrated in FIGS. 4 and 5 are slightly different from each other, since the EPG illustrated in FIG. 4 includes an icon 420 representing the state of 'communication-requesting,' while the EPG illustrated in FIG. 5 includes an icon representing the state of 'communication-undecided.' The EPG screen will be explained below mainly with reference to FIG. 4, since FIG. 5 is almost identical to FIG. 4.

Referring to FIG. 4, the EPG screen displays the broadcast schedules of the programs categorized by channels. For example, the program 'News Spotlight' starts at 7 and finishes at 8.

The result information in response to the communication request is also indicated for each of the programs. The icons representing the result information thus include an in-process icon 410, a requesting icon 420, an acceptance icon 430, and a rejection icon 440. Therefore, the program 'football to...' is currently performing communication, and the program 'Snooker: World Championship' has the communication accepted. Other remaining programs are in either rejected state or requesting state.

FIG. 5 shows the determination information in response to the communication request, provided for each of the programs. The icons representing the determination information may include an in-process icon 510, an un-decided icon 520, an acceptance icon 530, and a rejection icon 540.

Since the result information and determination information in response to the communication request are displayed on the EPG, the users can easily check about the status of his communication request.

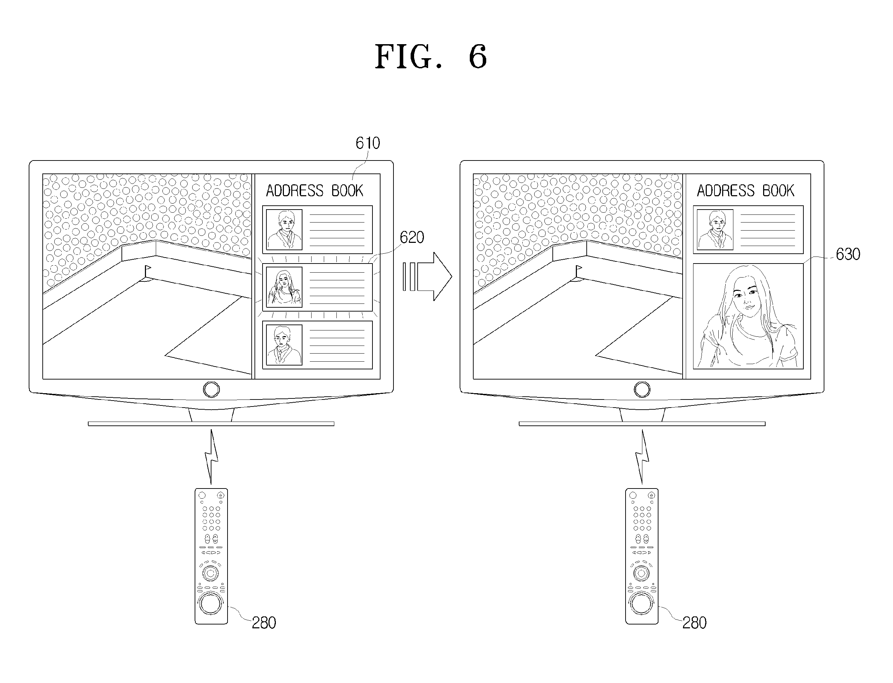

Referring to FIG. 6, an example of communication in video telephone services according to an exemplary embodiment of the present invention will be explained. FIG. 6 illustrates a screen to select a counterpart of video telephone services according to an exemplary embodiment of the present invention.

Referring to FIG. 6, an address book 610 is displayed on the left-side TV for video telephone services. As shown, it is possible to view the current program even when the address book 610 is displayed on the screen.

The address book 610 lists receivers currently connected for communication. Therefore, FIG. 6 illustrates an example where the user is communication with a plurality of counterparts.

The communication requester selects a receiver to participate in video telephone services, from the address book 610 using the remote controller 280. An icon 620 of the selected receiver may be highlighted for better notice of the communication requester.

On the right-side TV of FIG. 6, the screen of the receiver of the selected receiver icon 620 is enlarged upon selection, and the selected receiver joins the video telephone services,

As explained above, both the communication requester and the receiver can view the broadcast program while communicating with each other through video telephone services.

While the result information and the determination information are displayed in the form of icons on the EPG program region, the information may be displayed on other part of the EPG. For example, the result information and the determination information may be displayed on the bottom side of the EPG screen, when a predetermined program is selected.

Furthermore, while the one-to-one communication is exemplified to explain the embodiments of the present invention above, one will understand the concept of the present invention is equally applicable to communication between one TV and a plurality of other TVs.

Furthermore, while the TV communication is carried out using the Internet in the exemplary embodiments of the present invention, one will understand that other communication networks are applicable. For example, a telephone communication line, or mobile communication network may be utilized to provide the communication intended for by the present invention.

As explained above, according to the exemplary embodiments of the present invention, a method of providing communication between image apparatuses and an image apparatus applying the same are provided, in which the image apparatuses, connected via a communication network, can communication with each other using an Electronic Program Guide (EPG). According to the method, more systematic and convenience communication is provided among a plurality of TV users.

Since the communication request is processed based on the EPG, the users can request communication with the intended counterpart without having to stop viewing the current TV program. Accordingly, communication starts as the predetermined TV program starts, and the users can enjoy communications while viewing the TV program, conveniently.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing communication of an image apparatus (200), the method comprising:
selecting, using an input device (280), a program on an Electronic Program Guide (EPG); and
inputting, using the input device (280), a communication request regarding the selected program to an external image apparatus (100) connected via a communication network (150).

2. The method of claim 1, further comprising:
sending information regarding the communication request to the external image apparatus (100);
receiving a result from the external image apparatus (100) in response to the communication request; and
displaying result information regarding the result in response to the communication request on the EPG.

3. The method of claim 2, wherein the displaying comprises displaying an icon which represents the result information at a region of the EPG that displays the selected program.

4. The method of claim 2, wherein the result information comprises one of a communication-requesting state, a communication-accepted state, a communication-rejected state, and a communication-in-process state.

5. The method of claim 4, further comprising:
beginning communication with the external image apparatus (100) at a time when a first program starts, the first program having the communication-accepted state as the result information; and
changing the result information of the first program to the communication-in-process state.

6. The method of claim 5, further comprising changing the channel of the external image apparatus (100) to a channel which broadcasts the first program, at a time when the first program starts.

7. The method of claim 5, further comprising controlling both the image apparatus (200) and the external image apparatus (100) to enter a power-on state at the time when the first program starts, if at least one of the image apparatus (200) and the external image apparatus (100) is in power-off state.

8. The method of claim 4, further comprising recording a second program along with content of the communication, the second program having the communication-in-process state as the result information.

9. The method of claim 2, wherein the information about the communication request comprises at least one of information about whether or not the communication is requested, user information, and program information.

10. The method of claim 1, wherein the inputting comprises inputting the communication request regarding a portion or an entire duration of broadcast time of the selected program.

11. The method of claim 1, wherein the communication comprises audio communication, or video telephone services.

12. The method of claim 1, wherein the image apparatus (200) and the external image apparatus (100) comprise a broadcast receiving device to receive a broadcast signal and display the received broadcast signal.

13. An image apparatus (200), comprising:
an interface (260) which connects to an external image apparatus (100) via a communication network (150); and
a control unit (250) which controls a communication request with the external image apparatus (100), input by a user, regarding a program selected by the user on an Electronic Program Guide (EPG).

14. The image apparatus (200) of claim 13, wherein the interface (260) sends information regarding the communication request to the external image apparatus (100), and receives from the external image apparatus (100) a result determined in response to the communication request, and
the control unit (250) displays result information on the EPG to provide information about the result determined in response to the communication request.

15. The image apparatus (200) of claim 14, wherein the control unit (250) displays the result information along with an icon at a region of the EPG that shows the selected program.

16. The image apparatus (200) of claim 14 or 15, wherein the result information comprises one of a communication-requesting state, a communication-accepted state, a communication-rejected state, and a communication-in-process state.

17. The image apparatus (200) of claim 16, wherein the control unit (250) begins communication with the external image apparatus (100) at a time when a first program starts, the first program comprising the communication-accepted state as the result information, and changes the result information of the first program to the communication-in-process state.

18. The image apparatus (200) of claim 16, wherein the control unit (250) records a second program along with content of the communication, the second program including the communication-in-process state as the result information.

19. The image apparatus (200) of any of claims 13 to 18, wherein the control unit (250) receives a communication request for a portion or an entire duration of broadcast time of the selected program.

20. The image apparatus (200) of any of claims 13 to 19, wherein the communication comprises audio communication, or video telephone services.

21. The image apparatus (200) of any of claims 13 to 20, wherein the image apparatus (200) and the external image apparatus (100) comprise a broadcast receiving device to receive a broadcast signal and display the received broadcast signal.

22. A method of providing communication of an image apparatus (200), comprising:
receiving information about a communication request from an external image apparatus (100) connected via a communication network (150);
inputting, using an input device (280), determination information comprising information about whether the user accepts or rejects the received communication request;
sending the determination information to the external image apparatus (100); and
displaying the determination information on an Electronic Program Guide (EPG).

23. The method of claim 22, wherein the displaying comprises displaying an icon which represents the result information at a region of the EPG that shows a program related to the communication request.

24. An image apparatus (200) comprising:
an interface (260) which connects to an external image apparatus (100) via a communication network (150), receives information about a communication request from the external image apparatus (100), and sends determination information comprising information about whether the received communication request is accepted or rejected to the external image apparatus (100); and
a control unit (250) which receives the determination information from a user, and displays the determination information on an Electronic Program Guide (EPG).

25. The image apparatus (200) of claim 24, wherein the control unit (250) displays an icon to represent the result information on a region of the EPG that shows a program related to the communication request.

## Amended claims

### Amended claims in accordance with Rule 137(2) EPC.

**1.** A method of providing communication of an image apparatus (200), the method
**characterised by**:
selecting, using an input device (280), a program on an Electronic Program Guide (EPG); and
inputting, using the input device (280), a communication request regarding the selected program to an external image apparatus (100) connected via a communication network (150) in order to communicate with the external image apparatus (100);
sending information regarding the communication request to the external image apparatus (100);
receiving a result from the external image apparatus (100) in response to the communication request; and
displaying result information regarding the result in response to the communication request on the EPG.

**2.** The method of claim 1, wherein the inputting comprises inputting the communication request which is a request to communicate with the external image apparatus (100) during broadcasting time of the selected program.

**3.** The method of claim 2, wherein the displaying comprises displaying an icon which represents the result information at a region of the EPG that displays the selected program.

**4.** The method of claim 2, wherein the result information comprises one of a communication-requesting state, a communication-accepted state, a communication-rejected state, and a communication-in-process state.

**5.** The method of claim 4, further comprising:
beginning communication with the external image apparatus (100) at a time when a first program starts, the first program having the communication-accepted state as the result information; and
changing the result information of the first program to the communication-in-process state.

**6.** The method of claim 5, further comprising changing the channel of the external image apparatus (100) to a channel which broadcasts the first program, at a time when the first program starts.

**7.** The method of claim 5, further comprising controlling both the image apparatus (200) and the external image apparatus (100) to enter a power-on state at the time when the first program starts, if at least one of the image apparatus (200) and the external image apparatus (100) is in power-off state.

**8.** The method of claim 4, further comprising recording a second program along with content of the communication, the second program having the communication-in-process state as the result information.

**9.** The method of claim 2, wherein the information about the communication request comprises at least one of information about whether or not the communication is requested, user information, and program information.

**10.** The method of claim 1, wherein the inputting comprises inputting the communication request regarding a portion or an entire duration of broadcast time of the selected program.

**11.** The method of claim 1, wherein the communication comprises audio communication, or video telephone services.

**12.** The method of claim 1, wherein the image apparatus (200) and the external image apparatus (100) comprise a broadcast receiving device to receive a broadcast signal and display the received broadcast signal.

**13.** An image apparatus (200), **characterised by**:
an interface (260) which connects to an external image apparatus (100) via a communication network (150); and
a control unit (250) which controls a communication request with the external image apparatus (100), input by a user, regarding a program selected by the user on an Electronic Program Guide (EPG) in order to communicate with the external image apparatus (100),
wherein the interface (260) sends information regarding the communication request to the external image apparatus (100), and receives from the external image apparatus (100) a result determined in response to the communication request, and
the control unit (250) displays result information on the EPG to provide information about the result determined in response to the communication request.

**14.** The image apparatus (200) of claim 13, wherein the communication request is a request to communicate with the external image apparatus (100) during broadcasting time of the selected program.

**15.** The image apparatus (200) of claim 14, wherein the control unit (250) displays the result information along with an icon at a region of the EPG that shows the selected program.

**16.** The image apparatus (200) of claim 14 or 15, wherein the result information comprises one of a communication-requesting state, a communication-accepted state, a communication-rejected state, and a communication-in-process state.

**17.** The image apparatus (200) of claim 16, wherein the control unit (250) begins communication with the external image apparatus (100) at a time when a first program starts, the first program comprising the communication-accepted state as the result information, and changes the result information of the first program to the communication-in-process state.

**18.** The image apparatus (200) of claim 16, wherein the control unit (250) records a second program along with content of the communication, the second program including the communication-in-process state as the result information.

**19.** The image apparatus (200) of any of claims 13 to 18, wherein the control unit (250) receives a communication request for a portion or an entire duration of broadcast time of the selected program.

**20.** The image apparatus (200) of any of claims 13 to 19, wherein the communication comprises audio communication, or video telephone services.

**21.** The image apparatus (200) of any of claims 13 to 20, wherein the image apparatus (200) and the external image apparatus (100) comprise a broadcast receiving device to receive a broadcast signal and display the received broadcast signal.

**22.** A method of providing communication of an image apparatus (200),
**characterised by**:
receiving information about a communication request, which is a request to communicate with the external image apparatus (100) during broadcasting time of the selected program, from an external image apparatus (100) connected via a communication network (150);
inputting, using an input device (280), determination information comprising information about whether the user accepts or rejects the received communication request;
sending the determination information to the external image apparatus (100); and
displaying the determination information on an Electronic Program Guide (EPG).

**23.** The method of claim 22, wherein the displaying comprises displaying an icon which represents the result information at a region of the EPG that shows a program related to the communication request.

**24.** An image apparatus (200) **characterised by**:
an interface (260) which connects to an external image apparatus (100) via a communication network (150), receives information about a communication request, which is a request to communicate with the external image apparatus (100) during broadcasting time of the selected program, from the external image apparatus (100), and sends determination information comprising information about whether the received communication request is accepted or rejected to the external image apparatus (100); and
a control unit (250) which receives the determination information from a user, and displays the determination information on an Electronic Program Guide (EPG).

**25.** The image apparatus (200) of claim 24, wherein the control unit (250) displays an icon to represent the result information on a region of the EPG that shows a program related to the communication request.
